# FASCICULE DE BREVET EUROPEEN

(11) **EP 1 645 595 B1**
(45) Date de publication et mention de la délivrance du brevet: **27.08.2008**
(21) Numéro de dépôt: 05300808.2
(22) Date de dépôt: 11.10.2005
(51) Int. Cl.: C08L 95/00, E01C 7/18, C08K 5/10

(54) **Obtention de liants routiers à base de bitume et d'une nouvelle gamme de fluxants d'origine naturelle fonctionnalisés**
Herstellung von Bitumen basierten Strassenbindemitteln und von einem neuen Bereich von fluxen aus natürlichem Material
Preparation of road binders based on bitumen and of a novel range of functionalized fluxes derived from natural sources

(30) Priorité: 11.10.2004 FR 0452334
(43) Date de publication de la demande: 12.04.2006
(73) Titulaire: COLAS, 92100 Boulogne-Billancourt (FR)
(72) Inventeur: Deneuvillers, Christine, 92290, Chatenay Malabry (FR); Hoang, Lê Chiên, 86340, Nouaille Maupertuis (FR)
(74) Mandataire: Michelet, Alain

(56) Documents cités:
- FR-A- 2 768 150
- US-A- 4 861 377

## Description

La présente invention concerne les liants à base de bitume utilisés principalement dans la réalisation de couches et/ou revêtements de construction routière et/ou de génie civil, et plus particulièrement les fluxants à base de matières grasses d'origine naturelle entrant dans la composition de ces liants.

Le bitume est le principal liant hydrocarboné utilisé dans le domaine de la construction routière ou du génie civil. Il peut être utilisé pur ou modifié par ajout de polymères, il est alors appelé bitume modifié.

Il existe différents moyens de rendre le bitume ou le bitume modifié maniable : soit par chauffage en fonction de sa viscosité, soit en le plaçant en émulsion ou encore en abaissant sa viscosité par mélange avec des solvants ou "fluxants", pour la plupart d'origine pétrolière ou carbochimique.

Le bitume retrouve ses propriétés d'origine, une fois mis en oeuvre, quelle que soit la technique employée, respectivement par refroidissement, par évaporation de l'eau de l'émulsion ou par évaporation du solvant. Cette dernière alternative conduit à des dégagements dans l'atmosphère de composés organiques volatils, issus d'énergie fossile, dégagements peu recommandés pour l'environnement.

On sait déjà utiliser des agents fluxants, également appelés huiles de fluxage, à base de matières grasses animales et/ou végétales, permettant ainsi d'éviter le dégagement de composés organiques volatils (COV).

Ainsi, la demande de brevet FR 2721043 (VIALIT) décrit une émulsion de bitume contenant outre le bitume, une huile de fluxage et un agent d'adhérence à base d'amines grasses ou de silicium organique. L'huile de fluxage peut être une huile végétale, l'un de ses dérivés tels que sa partie acide gras, un mélange d'acides gras, un produit de transestérification ou un dérivé de résine alkyde de l'huile.

La demande FR 2770850 (ELF ANTAR FRANCE) décrit une composition bitumineuse comprenant un adjuvant dérivé d'une huile végétale. Ledit adjuvant consiste en un résidu de distillation de cette huile ou d'un produit de transestérification de ladite huile.

Toutefois, les matières grasses d'origine naturelle utilisées dans ces demandes ne possèdent pas un pouvoir siccatif suffisant pour arriver à polymériser assez rapidement sans catalyseur, ce qui conduit à des liants trop mous se dégradant parfois rapidement lorsque l'on veut remettre la chaussée en service très rapidement. Pour pallier à ces inconvénients, certains brevets préconisent d'ajouter des catalyseurs comprenant des sels métalliques, mais ceux-ci sont peu recommandés pour l'environnement.

La demande FR 2768150 (SAADA) décrit un liant bitumineux comprenant un fluxant choisi parmi les esters d'acides gras, obtenus notamment par transestérification d'huiles végétales, et de préférence un catalyseur de polymérisation du fluxant. Les huiles employées sont des esters méthyliques d'huiles de colza, de lin ou de tournesol, ayant éventuellement été préalablement isomérisées.

La demande FR 2701021 (SCREG) décrit une émulsion comprenant un liant hydrocarboné, notamment un bitume, et au moins une huile siccative ou demi siccative, naturelle ou synthétique ou au moins une standolie d'une telle huile et généralement un catalyseur de type métal de transition employé en tant qu'agent d'accélération.

Seule la demande EP 1482012 (LATEXFALT B.V.) décrit un liant bitumineux fluxé ne nécessitant pas l'emploi de catalyseurs de polymérisation de type métal de transition pour réticuler le fluxant. Ce liant comprend, outre le bitume, un élastomère, un ester d'alkyle en C₁₋C₄ d'un acide gras insaturé employé en tant que fluxant et un agent de durcissement à base de soufre favorisant la réticulation de l'élastomère.

Afin d'obtenir des fluxants d'origine naturelle modifiés chimiquement, les travaux de l'art antérieur n'envisagent donc pas d'autres modifications chimiques des matières grasses d'origine naturelle que des isomérisations, trans-estérifications, hydrolyses et estérifications.

La présente invention a pour objet un liant bitumineux comprenant un fluxant à base de matières grasses d'origine naturelle, ayant de bonnes propriétés de solvant au moment de la préparation des liants et de bonnes propriétés de réactif après la mise en oeuvre de manière à donner au bitume ses propriétés d'usage, sans dégagement de composés organiques volatils.

Elle a encore pour but de disposer d'un fluxant tel que défini, ayant une siccativité et une viscosité suffisantes et dont les matières grasses d'origine naturelle possèdent des fonctions chimiques susceptibles de réagir avec des fonctions chimiques du bitume ou avec des fonctions chimiques d'autres molécules de fluxant, permettant ainsi leur réticulation en supprimant ou, tout au moins en limitant l'emploi de catalyseurs métalliques, ou permettant d'utiliser le cas échéant des catalyseurs organiques non nuisibles pour l'environnement.

L'invention a également pour but l'utilisation de matières grasses d'origine naturelle possédant de telles fonctions en tant que fluxant pour liant bitumineux.

L'invention a enfin pour but un liant hydrocarboné pour la construction routière ou de génie civil comprenant entre autres un fluxant présentant les avantages précités.

La demanderesse a découvert de façon surprenante qu'il était possible de remédier aux inconvénients de l'art antérieur et de remplir les objectifs mentionnés précédemment en utilisant des fluxants à base de matières grasses d'origine naturelle ayant été fonctionnalisées chimiquement, autrement dit "activées" chimiquement pour une application dans un liant routier.

Ainsi, le premier objet de la présente invention est un fluxant pour bitume à base de matières grasses d'origine naturelle comprenant des chaînes grasses hydrocarbonées, ces matières grasses d'origine naturelle ayant subi au moins une réaction de fonctionnalisation chimique ayant introduit au moins un groupe fonctionnel oxygéné.

De préférence, le groupe fonctionnel oxygéné introduit lors de la modification chimique des matières grasses d'origine naturelle est choisi parmi les groupes : acide carboxylique, diacide carboxylique, époxyde, peroxyde, aldéhyde, éther, ester, alcool et cétone, cette liste n'étant pas limitative. Par fonction éther, on entend la fonction éther oxyde.

Le bitume selon la présente invention est un mélange de matières hydrocarbonées naturelles issues de la fraction lourde obtenue lors de la distillation du pétrole, ou provenant de gisements naturels se présentant sous forme solide ou liquide, de densité comprise entre 0,8 et 1,2. Sont également admis comme bitumes au sens de l'invention les liants d'origine végétale tel que le Vegecol® commercialisé par la société Colas et décrit dans la demande de brevet FR 2853647, les bitumes modifiés par incorporation d'additifs de toute nature tels que des additifs en vue d'améliorer les caractéristiques d'adhésivité, en vue d'apporter artificiellement les propriétés nécessaires à la mise en émulsion cationique, par incorporation d'élastomères, sous forme de poudrette de caoutchouc ou autre, ou bien encore les bitumes améliorés par l'addition de polymères de différents types ; cette liste n'étant toutefois pas limitative.

Par "matières grasses d'origine naturelle", on entend, dans la présente invention, les matières grasses en provenance de la nature, mais aussi leurs dérivés, comme par exemple les monoesters gras obtenus par transestérification de triglycérides par des mono-alcools.

Les matières grasses d'origine naturelle utilisables dans la présente invention pour subir une réaction de fonctionnalisation chimique par oxydation sont choisies parmi les huiles obtenues dans la nature ou leurs dérivés, les graisses obtenues dans la nature ou leurs dérivés, et leurs mélanges, par exemple des huiles et graisses animales et/ou végétales, de préférence des huiles végétales et des graisses animales, mieux des huiles végétales. Ces matières grasses d'origine naturelle peuvent notamment provenir d'huiles végétales usagées de l'industrie agroalimentaire, par exemple d'huiles de friture, à condition que celles-ci aient une origine naturelle.

Sont donc exclues du cadre de l'invention les huiles et graisses de synthèse et les huiles et graisses fossiles, qui ne sont pas renouvelables et ne présentent pas d'intérêt dans le cadre du développement durable.

Préférentiellement, on utilisera les huiles végétales telles que les huiles de tournesol, de colza, d'arachide, de coprah, de lin, de palme, de soja, d'olive, de ricin, de maïs, de courge, de pépins de raisin, de jojoba, de sésame, de noix, de noisette, de bois de chine, le tall oil, leurs dérivés, ainsi que leur mélanges.

Les matières grasses d'origine naturelle utilisables dans la présente invention peuvent subir une réaction d'isomérisation avant d'être soumises à la fonctionnalisation chimique de l'invention. Comme cela est bien connu, le but du traitement d'isomérisation est l'augmentation du nombre de doubles liaisons C=C conjuguées, qui se traduit par une augmentation du pouvoir siccatif, et une diminution de la viscosité initiale. Les conditions de cette réaction d'isomérisation ont été largement décrites dans la littérature, par exemple dans Bailey's Industrial Oil and Fat Products, 6th Edition (2005), Fereidoon Shahidi Ed., John Wiley & Sons, Inc.

Les fluxants de l'invention sont des matières grasses d'origine naturelle chimiquement fonctionnalisées, terme par lequel il faut comprendre au sens de la présente invention des matières grasses d'origine naturelle modifiées par l'introduction d'au moins un groupe fonctionnel oxygéné choisi de préférence parmi les groupes acide carboxylique, diacide carboxylique, époxyde, peroxyde, aldéhyde, éther, ester, alcool et cétone. Ces groupes fonctionnels sont susceptibles de réagir avec des fonctions chimiques présentes dans le bitume et/ou avec des fonctions chimiques d'autres molécules de fluxant. Les fonctions chimiques présentes dans le bitume sont par exemple des fonctions acide ou alcool.

Les matières grasses d'origine naturelle qui seront fonctionnalisées chimiquement selon l'invention, et donc activées, peuvent être, sans limitation, directement les huiles et graisses d'origine naturelle, ou bien des acides gras, des esters d'acides gras, préférentiellement des esters d'alkyle, mieux des mono-esters d'alkyle, des alcools gras, des esters d'alcools gras, des triglycérides, des esters de diacides gras, des esters d'acides résiniques, des acides résiniques, des dérivés de ces composés, et des mélanges de ces composés, d'origine animale ou végétale.

Au sens de la présente invention, on entend par acides gras des acides mono, di ou tricarboxyliques aliphatiques en C₄-C₂₈ saturés, mono-insaturés ou poly-insaturés, linéaires ou ramifiés, cycliques ou acycliques.

Au sens de la présente invention, on entend par alcools gras des alcools ou polyols aliphatiques en C₄-C₂₈ saturés, mono-insaturés ou poly-insaturés, linéaires ou ramifiés, cycliques ou acycliques.

On préfèrera fonctionnaliser chimiquement des acides gras, des esters d'acides gras, des triglycérides, des esters de diacides gras, des acides résiniques, des esters d'acides résiniques, notamment des matières grasses d'origine naturelle comprenant au moins un mono-ester d'alkyle d'acide gras.

Selon un mode de réalisation préférentiel, on réalisera un fluxant selon l'invention à partir d'au moins un triglycéride, par transestérification de ce dernier au moyen d'un alcool en C₁-C₄, libérant des monoesters d'acides gras, suivie d'une oxydation introduisant au moins un groupe fonctionnel, de préférence époxyde et/ou éther. La transestérification a pour but de diminuer la viscosité des matières grasses d'origine naturelle.

Selon un autre mode de réalisation préférentiel, on réalisera un fluxant selon l'invention à partir d'au moins un dérivé de tall oil, par oxydation introduisant au moins un groupe fonctionnel, de préférence époxyde et/ou éther. Le tall oil est un mélange d'acides gras (acides oléique, linoléique, linoléique...), d'acides résiniques et de substances insaponifiables.

De façon optionnelle, le dérivé de tall oil peut subir une estérification au moyen d'un alcool en C₁-C₄ avant de subir ou après avoir subi la ou les réactions d'oxydation.

Les matières grasses d'origine naturelle utilisables dans la présente invention possèdent des doubles liaisons C=C, lesquelles jouent un rôle primordial dans le durcissement du liant. En effet, après répandage, le durcissement du liant est obtenu par réticulation du fluxant en présence de l'oxygène de l'air.

La fonctionnalisation chimique est de préférence effectuée sur les chaînes grasses hydrocarbonées des matières grasses d'origine naturelle, en particulier sur leurs doubles liaisons C=C, conjuguées ou non. Les réactifs de fonctionnalisation chimique employés sont par exemple l'oxygène moléculaire, l'eau oxygénée et l'anhydride maléique, dans des conditions variables de température, pression et durée de réaction, optionnellement en présence de catalyseurs. Toutes ces réactions de fonctionnalisation sont des réactions classiques de la chimie organique, décrites par exemple dans Bailey's Industrial Oil and Fat Products, 6th Edition (2005), Fereidoon Shahidi Ed., John Wiley & Sons, Inc.

Les fonctionnalisations chimiques réalisées sur les matières grasses d'origine naturelle conduisent généralement à l'introduction de plusieurs fonctions chimiques différentes. Elles sont susceptibles de réagir avec le bitume et d'activer le processus de durcissement du fluxant au sein du bitume fluxé.

Selon un mode de réalisation avantageux de l'invention, les chaînes grasses hydrocarbonées des matières grasses d'origine naturelle de l'invention comportent des doubles liaisons carbone-carbone dont au moins 5% ont subi une réaction de fonctionnalisation chimique ayant introduit un groupe époxyde. Une telle réaction d'époxydation peut être accomplie en utilisant comme réactif l'oxygène moléculaire ou l'eau oxygénée.

Selon un autre mode de réalisation avantageux de l'invention, les chaînes grasses hydrocarbonées des matières grasses d'origine naturelle de l'invention comportent des doubles liaisons carbone-carbone dont au moins 5% ont subi une réaction de fonctionnalisation chimique ayant introduit un groupe éther.

Un groupe diacide carboxylique peut être obtenu, par exemple, par greffage d'une molécule d'anhydride maléique sur une double liaison carbone-carbone initialement présente dans la matière grasse. La présence de fonctions diacide carboxylique sur la chaîne hydrocarbonée permet d'améliorer la siccativité des matières grasses employées.

Selon un mode de réalisation préférentiel de l'invention, les chaînes grasses hydrocarbonées des matières grasses d'origine naturelle de l'invention comportent des doubles liaisons carbone-carbone dont au moins 5% ont subi une réaction de fonctionnalisation chimique par greffage d'une molécule d'anhydride maléique.

La fonctionnalisation des matières grasses d'origine naturelle conduit à l'introduction d'atomes d'oxygène sur les molécules de fluxant, lesquels peuvent participer à la formation de ponts oxygène entre les molécules de fluxant et/ou entre les molécules de fluxant et d'autres composés du mélange comme le bitume.

Dans le cas de chaînes hydrocarbonées de fluxant non modifié, ces ponts oxygène sont réalisés à partir de l'oxygène de l'air qui doit être greffé sur deux molécules, ce qui rend plus difficile la réalisation de tels ponts.

Généralement, le fluxant selon l'invention présente les caractéristiques suivantes :
- une viscosité cinématique comprise entre 4 et 10 mm²/s à 40°C,
- un indice d'acide selon la norme NF T 60-204 supérieur à 5, mieux supérieur à 10 mg KOH/g,
- un indice d'iode selon la norme ISO 3961 supérieur à 60 g d'l₂/100g,
- un indice de saponification selon la norme ISO 3657 compris entre 150 et 250 mg KOH/g,
- un indice de peroxyde selon la norme NF T 60-220 inférieur à 10, mieux inférieur à 5 meq d'O₂/kg,

Les fluxants selon l'invention sont avantageusement utilisés dans les techniques d'enduits superficiels aux liants anhydres, dans les techniques d'enduits superficiels à l'émulsion, dans les techniques d'enrobage à froid à l'émulsion ou dans les techniques d'enrobage au bitume fluxé.

La présente invention concerne également l'utilisation d'une matière grasse d'origine naturelle fonctionnalisée chimiquement, telle que définie précédemment, en tant que fluxant pour liant bitumineux, lequel est destiné principalement à la construction routière ou au génie civil.

L'invention a encore pour objet un liant hydrocarboné pour la réalisation de couches et/ou revêtements de construction routière et/ou de génie civil comprenant au moins un bitume et au moins un fluxant tel que défini précédemment.

Les liants routiers utilisant les fluxants selon la présente invention comprennent généralement de 0,1 à 30 % de fluxant, préférentiellement de 0,5 à 10 %, en poids par rapport au poids total de liant.

Lorsqu'ils sont utilisés dans les techniques d'enduits superficiels aux liants anhydres, ces fluxants représentent préférentiellement 2 à 15% en poids par rapport au poids total de liant.

Lorsqu'ils sont utilisés dans les techniques d'enduits superficiels à l'émulsion, ces fluxants représentent de préférence de 0,5 à 5% en poids par rapport au poids total de liant.

Lorsqu'ils sont utilisés dans les techniques d'enrobage à froid à l'émulsion, ces fluxants représentent de préférence de 0,5 à 30% en poids par rapport au poids total de liant.

Lorsqu'ils sont utilisés dans les techniques d'enrobage au bitume fluxé, ces fluxants représentent de préférence de 0,5 à 15% en poids par rapport au poids total de liant.

La présente invention a enfin pour objet un matériau pour la réalisation de couches et/ou revêtements de construction routière et/ou de génie civil comprenant un liant hydrocarboné pour la réalisation de couches et/ou revêtements de construction routière et/ou de génie civil tel que défini précédemment.

Le matériau de l'invention peut comprendre en outre un granulat. Lorsqu'il n'en comprend pas, il peut être employé pour la réalisation de couches d'accrochage au bitume fluxé ou à l'émulsion, de produits de nettoyage, ou pour empêcher des salissures sur les engins de chantiers.

Les exemples suivants, non limitatifs, illustrent la présente invention.

**Exemple 1** : Pourcentage de perte de masse de fluxant initial pour un enduit superficiel comprenant un fluxant traditionnel (non naturel), le Gedeflux 200/300, un fluxant composé d'un mélange d'hydrocarbures aromatiques vendu par la société VTF® (essai comparatif) :

| | |
|---|---|
| Bitume 160/220 Shell CRR | 91,9% |
| Gedeflux 200/300 | 8,1% |
| Viscosité STV 4mm, 25°C | 166 s |
| Perte de masse, en poids de fluxant initial, après 14 jours à 50°C | 83% |
| TBA du liant résiduel après 24h à 85°C | 34°C |

Le bitume et le fluxant sont mélangés à 130 °C.

TBA désigne la température bille et anneau, mesurée selon la norme européenne EN 1427. Ce paramètre permet d'évaluer la montée en cohésion, sa valeur étant d'autant plus élevée que la cohésion est avancée.

**Exemple 2** : Pourcentage de perte de masse de fluxant initial pour un enduit superficiel comprenant un fluxant selon l'invention :

| | |
|---|---|
| Bitume 160/220 Shell CRR | 92,6% |
| Dérivé de tall oil estérifié et époxydé | 7,4% |
| Viscosité STV 4mm, 25°C | 170 s |
| Perte de masse, en poids de fluxant initial, après 14 jours à 50°C | 0% |
| TBA du liant résiduel après 24h à 85°C | 31 °C |

**Exemple 3** : Pourcentage de perte de masse de fluxant initial pour un enduit superficiel comprenant un fluxant non fonctionnalisé selon l'invention (essai comparatif) :

| | |
|---|---|
| Bitume 160/220 Shell CRR | 91,3% |
| Esters d'acides gras de colza | 7,7% |
| Octoate de Mn | 1% |
| Viscosité STV 4mm, 25°C | 170 s |
| Perte de masse, en poids de fluxant initial, après 14 jours à 50°C | 1 % |
| TBA du liant résiduel après 24h à 85°C | 30°C |

**Exemple 4** : Pourcentage de perte de masse de fluxant initial pour un enduit superficiel comprenant un fluxant fonctionnalisé selon l'invention :

| | |
|---|---|
| Bitume 160/220 Shell CRR | 91,5% |
| Esters d'acides gras de colza oxydés | 7,7% |
| Octoate de Mn | 0,8% |
| Viscosité STV 4mm, 25°C | 170 s |
| Perte de masse, en poids de fluxant initial, après 14 jours à 50°C | 0% |
| TBA du liant résiduel après 24h à 85°C | 34°C |

Comme le prouvent les exemples, la fonctionnalisation chimique de matières grasses d'origine naturelle selon l'invention suivie de leur incorporation dans un liant permet de supprimer toute perte de masse du liant en fluxant.

En outre, les fluxants de l'invention, grâce aux groupes fonctionnels qui ont été introduits dans leur structure, sont « actifs », car ils conduisent à une évolution de la consistance des mélanges réalisés aussi rapide (exemple 4) que celle obtenue avec les anciens fluxants d'origine fossile (exemple 1), et plus rapide que celle observée avec les fluxants végétaux non activés par fonctionnalisation (exemple 2).

Le fait que les valeurs de TBA des exemples 2 et 4 soient supérieures à celle obtenue dans l'exemple 3 indique que la fonctionnalisation chimique selon l'invention est responsable d'une activation du processus de durcissement du fluxant au sein du liant.

Les nouveaux fluxants objets de l'invention possèdent une bonne réactivité vis-à-vis du bitume et polymérisent rapidement une fois mélangés avec lui.

De plus, l'étude de la perte de masse au cours du temps montre qu'ils ne s'évaporent pas dans l'atmosphère. Au contraire, ils durcissent dans le bitume une fois leur mission terminée, ce qui a pour effet de supprimer la quasi-totalité des émissions atmosphériques. Ceci représente un intérêt considérable en termes réglementaires de transport et d'étiquetage.

## Revendications

1. Liant hydrocarboné pour la réalisation de couches et/ou revêtements de construction routière et/ou de génie civil, comprenant au moins un bitume et au moins un fluxant pour bitume à base de matières grasses d'origine naturelle comprenant des chaînes grasses hydrocarbonées, **caractérisé en ce que** ces matières grasses d'origine naturelle ont subi au moins une réaction de fonctionnalisation chimique ayant introduit au moins un groupe fonctionnel oxygéné.

2. Liant selon la revendication 1, **caractérisé en ce qu'**il comprend de 0,1 à 30 % de fluxant en poids par rapport au poids total de liant, préférentiellement de 0,5 à 10 % en poids par rapport au poids total de liant.

3. Liant selon la revendication 2, **caractérisé en ce qu'**il comprend 2 à 15 % de fluxant en poids par rapport au poids total de liant lorsqu'il est utilisé dans les techniques d'enduits superficiels aux liants anhydres.

4. Liant selon la revendication 2, **caractérisé en ce qu'**il comprend 0,5 à 5 % de fluxant en poids par rapport au poids total de liant lorsqu'il est utilisé dans les techniques d'enduits superficiels à l'émulsion.

5. Liant selon la revendication 2, **caractérisé en ce qu'**il comprend 0,5 à 30% de fluxant en poids par rapport au poids total de liant lorsqu'il est utilisé dans les techniques d'enrobage à froid à l'émulsion.

6. Liant selon la revendication 2, **caractérisé en ce qu'**il comprend 0,5 à 15 % de fluxant en poids par rapport au poids total de liant lorsqu'il est utilisé dans les techniques d'enrobage au bitume fluxé.

7. Liant selon l'une quelconque des revendications précédentes, **caractérisé en ce que** le groupe fonctionnel oxygéné est choisi parmi les groupes acide carboxylique, diacide carboxylique, époxyde, peroxyde, aldéhyde, éther, ester, alcool et cétone.

8. Liant selon l'une quelconque des revendications précédentes, **caractérisé en ce que** lesdites matières grasses d'origine naturelle sont choisies parmi les huiles obtenues dans la nature ou leurs dérivés, les graisses obtenues dans la nature ou leurs dérivés, les huiles végétales usagées provenant de l'industrie agroalimentaire et leurs mélanges.

9. Liant selon l'une quelconque des revendications précédentes, **caractérisé en ce que** lesdites matières grasses d'origine naturelle sont choisies parmi les huiles et graisses animales et/ou végétales, de préférence les huiles végétales.

10. Liant selon la revendication 9, **caractérisé en ce que** les huiles végétales sont choisies parmi les huiles de tournesol, de colza, d'arachide, de coprah, de lin, de palme, de soja, d'olive, de ricin, de maïs, de courge, de pépins de raisin, de jojoba, de sésame, de noix, de noisette, de bois de chine, le tall oil, ainsi que leurs mélanges.

11. Liant selon l'une quelconque des revendications précédentes, **caractérisé en ce que** lesdites matières grasses d'origine naturelle sont des acides gras, des esters d'acides gras, préférentiellement des esters d'alkyle, des alcools gras, des esters d'alcools gras, des triglycérides, des esters de diacides gras, des esters d'acides résiniques, des acides résiniques, des dérivés de ces composés, et des mélanges de ces composés, d'origine animale ou végétale.

12. Liant selon l'une quelconque des revendications précédentes, **caractérisé en ce que** lesdites matières grasses d'origine naturelle comprennent au moins un mono-ester d'acide gras, obtenu par trans-estérification d'un triglycéride au moyen d'un alcool en C₁-C₄.

13. Liant selon la revendication 12, **caractérisé en ce que** la réaction de fonctionnalisation chimique a introduit au moins un groupe époxyde et/ou éther.

14. Liant selon l'une quelconque des revendications 1 à 11, **caractérisé en ce que** lesdites matières grasses d'origine naturelle comprennent au moins un dérivé de tall oil ayant subi au moins une réaction de fonctionnalisation chimique ayant introduit au moins un groupe fonctionnel époxyde et/ou éther.

15. Liant selon l'une quelconque des revendications précédentes, **caractérisé en ce que** le fluxant à base de matières grasses d'origine naturelle a une viscosité cinématique comprise entre 4 et 10 mm²/s à 40 °C.

16. Matériau pour la réalisation de couches et/ou revêtements de construction routière et/ou de génie civil **caractérisé en ce qu'**il comprend un liant hydrocarboné pour la réalisation de couches et/ou revêtements de construction routière et/ou de génie civil selon l'une quelconque des revendications 1 à 15.

17. Matériau selon la revendication 16, **caractérisé en ce qu'**il comprend en outre un granulat.

18. Utilisation en tant que fluxant pour liant bitumineux d'une matière grasse d'origine naturelle comprenant des chaînes grasses hydrocarbonées, **caractérisée en ce que** ladite matière grasse d'origine naturelle a subi au moins une réaction de fonctionnalisation chimique ayant introduit au moins un groupe fonctionnel oxygéné, choisi de préférence parmi les groupes acide carboxylique, diacide carboxylique, époxyde, peroxyde, aldéhyde, éther, ester, alcool et cétone.

19. Utilisation selon la revendication 18 dans les techniques d'enduits superficiels aux liants anhydres, dans les techniques d'enduits superficiels à l'émulsion, dans les techniques d'enrobage à froid à l'émulsion ou dans les techniques d'enrobage au bitume fluxé.

20. Utilisation selon l'une quelconque des revendications 18 ou 19, **caractérisée en ce que** ladite matière grasse d'origine naturelle est telle que définie dans l'une quelconque des revendications 8 à 15.

21. Fluxant pour bitume à base de matières grasses d'origine naturelle comprenant des chaînes grasses hydrocarbonées, **caractérisé en ce que** ces matières grasses d'origine naturelle ont subi au moins une réaction de fonctionnalisation chimique ayant introduit au moins un groupe fonctionnel oxygéné choisi parmi les groupes peroxyde, aldéhyde, éther, ester, alcool et cétone.

22. Fluxant pour bitume à base de matières grasses d'origine naturelle comprenant des chaînes grasses hydrocarbonées, **caractérisé en ce qu'**il comprend au moins un dérivé de tall oil ayant subi au moins une réaction de fonctionnalisation chimique ayant introduit au moins un groupe fonctionnel choisi parmi les groupes acide carboxylique, époxyde, peroxyde, aldéhyde, éther, ester, alcool et cétone, de préférence époxyde et/ou éther.

23. Fluxant selon la revendication 22, **caractérisé en ce que** ledit dérivé de tall oil subit une estérification au moyen d'un alcool en C₁-C₄ avant ou après ladite réaction de fonctionnalisation chimique.

24. Fluxant pour bitume à base de matières grasses d'origine naturelle comprenant des chaînes grasses hydrocarbonées, **caractérisé en ce qu'**il comprend au moins un monoester d'alkyle d'acide gras ayant subi au moins une réaction de fonctionnalisation chimique ayant introduit au moins un groupe fonctionnel choisi parmi les groupes acide carboxylique, diacide carboxylique, peroxyde, aldéhyde, éther, ester, alcool et cétone, de préférence éther.

25. Fluxant selon l'une quelconque des revendications 21 à 24, **caractérisé en ce qu'**il présente une viscosité cinématique comprise entre 4 et 10 mm²/s à 40 °C.

26. Fluxant selon l'une quelconque des revendications 21 à 25, **caractérisé en ce que** lesdites matières grasses d'origine naturelle sont choisies parmi les huiles obtenues dans la nature ou leurs dérivés, les graisses obtenues dans la nature ou leurs dérivés, les huiles végétales usagées provenant de l'industrie agroalimentaire et leurs mélanges.

27. Fluxant selon l'une quelconque des revendications 21 à 26, **caractérisé en ce que** lesdites matières grasses d'origine naturelle sont choisies parmi les huiles et graisses animales et/ou végétales, de préférence les huiles végétales.

28. Fluxant selon la revendication 27, **caractérisé en ce que** les huiles végétales sont choisies parmi les huiles de tournesol, de colza, d'arachide, de coprah, de lin, de palme, de soja, d'olive, de ricin, de maïs, de courge, de pépins de raisin, de jojoba, de sésame, de noix, de noisette, de bois de chine, le tall oil, ainsi que leurs mélanges.

29. Fluxant selon l'une quelconque des revendications 21 à 28, **caractérisé en ce que** lesdites matières grasses d'origine naturelle sont des acides gras, des esters d'acides gras, préférentiellement des esters d'alkyle, des alcools gras, des esters d'alcools gras, des triglycérides, des esters de diacides gras, des esters d'acides résiniques, des acides résiniques, des dérivés de ces composés, et des mélanges de ces composés, d'origine animale ou végétale.

## Claims

1. A hydrocarbon binder for making road surface layers and/or road pavements and/or for civil engineering applications, comprising at least one bitumen and at least one bitumen fluxing oil based on fatty substances having a natural origin containing hydrocarbon fatty chains, wherein said fatty substances having a natural origin did undergo at least one chemical functionalization reaction having resulted in the introduction of at least one oxygenated functional group.

2. A binder according to claim 1, which comprises from 0.1 to 30% by weight of fluxing oil, as related to the binder total weight, preferably from 0.5 to 10% by weight, as related to the binder total weight.

3. A binder according to claim 2, which comprises from 2 to 15% by weight of fluxing oil, as related to the binder total weight, when used in anhydrous binder-based surface dressing methods.

4. A binder according to claim 2, which comprises from 0.5 to 5% by weight of fluxing oil, as related to the binder total weight, when used in emulsion-based surface dressing methods.

5. A binder according to claim 2, which comprises from 0.5 to 30% by weight of fluxing oil, as related to the binder total weight, when used in emulsion-based cold coating methods.

6. A binder according to claim 2, which comprises from 0.5 to 15% by weight of fluxing oil, as related to the binder total weight, when used in fluxed bitumen-based coating methods.

7. A binder according to any preceding claim, wherein the oxygenated functional group is selected from carboxylic acid, carboxylic diacid, epoxide, peroxide, aldehyde, ether, ester, alcohol and ketone groups.

8. A binder according to any preceding claim, wherein said fatty substances having a natural origin are selected from oils found in nature or their derivatives, fats found in nature or their derivatives, used vegetable oils originating from agri-food industry, and mixtures thereof.

9. A binder according to any preceding claim, wherein said fatty substances having a natural origin are selected from animal and/or vegetable oils and fats, preferably from vegetable oils.

10. A binder according to claim 9, wherein said vegetable oils are selected from sunflower seed oil, rapeseed oil, peanut oil, coconut oil, linseed oil, palm oil, soybean oil, olive oil, castor oil, corn oil, pumpkin seed oil, grape seed oil, jojoba oil, sesame oil, walnut oil, hazelnut oil, China wood oil, tall oil, as well as mixtures thereof.

11. A binder according to any preceding claim, wherein said fatty substances having a natural origin are chosen from fatty acids, fatty acid esters, preferably alkyl esters, fatty alcohols, fatty alcohol esters, triglycerides, fatty diacid esters, resin acid esters, resin acids, derivatives of such compounds, and mixtures of such compounds, either of animal or vegetable origin.

12. A binder according to any preceding claim, wherein said fatty substances having a natural origin comprise at least one fatty acid monoester, obtained by transesterifying a triglyceride by means of a C₁ to C₄ alcohol.

13. A binder according to claim 12, wherein said chemical functionalization reaction has introduced at least one epoxide and/or ether group.

14. A binder according to any of claims 1 to 11, wherein said fatty substances having a natural origin comprise at least one tall oil derivative having undergone at least one chemical functionalization reaction which introduced at least one epoxide and/or ether functional group.

15. A binder according to any preceding claim, wherein the fluxing oil based on fatty substances having a natural origin has a kinematic viscosity ranging from 4 to 10 mm²/s at 40°C.

16. A material for making road surface layers and/or road pavements and/or for civil engineering applications, **characterized in that** it comprises a hydrocarbon binder for making road surface layers and/or road pavements and/or for civil engineering applications according to any of claims 1 to 15.

17. A material according to claim 16, which further comprises an aggregate.

18. Use as a fluxing oil for bituminous binder of a fatty substance having a natural origin containing hydrocarbon fatty chains, wherein said fatty substance having a natural origin did undergo at least one chemical functionalization reaction resulting in the introduction of at least one oxygenated functional group preferably selected from carboxylic acid, carboxylic diacid, epoxide, peroxide, aldehyde, ether, ester, alcohol and ketone groups.

19. Use according to claim 18, in anhydrous binder-based surface dressing methods, in emulsion-based surface dressing methods, in emulsion-based cold coating methods or in fluxed bitumen-based coating methods.

20. Use according to any of claims 18 or 19, wherein said having a natural origin fatty substance is such as defined in any of claims 8 to 15.

21. A bitumen fluxing oil based on fatty substances having a natural origin containing hydrocarbon fatty chains, wherein said fatty substances having a natural origin did undergo at least one chemical functionalization reaction resulting in the introduction of at least one oxygenated functional group selected from peroxide, aldehyde, ether, ester, alcohol and ketone groups.

22. A bitumen fluxing oil based on fatty substances having a natural origin containing hydrocarbon fatty chains, which comprises at least one tall oil derivative having undergone at least one chemical functionalization reaction which introduced at least one functional group selected from carboxylic acid, epoxide, peroxide, aldehyde, ether, ester, alcohol and ketone groups, preferably from epoxide and/or ether.

23. A fluxing oil according to claim 22, wherein said tall oil derivative does undergo an esterification by means of a C₁ to C₄ alcohol, prior to or after said chemical functionalization reaction.

24. A bitumen fluxing oil based on fatty substances having a natural origin containing hydrocarbon fatty chains, which comprises at least one fatty acid alkyl monoester, having undergone at least one chemical functionalization reaction which introduced at least one functional group selected from carboxylic acid, carboxylic diacid, peroxide, aldehyde, ether, ester, alcohol and ketone groups, preferably ether.

25. A fluxing oil according to any of claims 21 to 24, which has a kinematic viscosity ranging from 4 to 10 mm²/s at 40°C.

26. A fluxing oil according to any of claims 21 to 25, wherein said fatty substances having a natural origin are selected from oils found in nature or their derivatives, fats found in nature or their derivatives, used vegetable oils originating from agri-food industry, and mixtures thereof.

27. A fluxing oil according to any of claims 21 to 26, wherein said fatty substances having a natural origin are selected from animal and/or vegetable oils and fats, preferably from vegetable oils.

28. A fluxing oil according to claim 27, wherein said vegetable oils are selected from sunflower seed oil, rapeseed oil, peanut oil, coconut oil, linseed oil, palm oil, soybean oil, olive oil, castor oil, corn oil, pumpkin seed oil, grape seed oil, jojoba oil, sesame oil, walnut oil, hazelnut oil, China wood oil, tall oil, as well as mixtures thereof.

29. A fluxing oil according to any of claims 21 to 28, wherein said fatty substances having a natural origin are fatty acids, fatty acid esters, preferably alkyl esters, fatty alcohols, fatty alcohol esters, triglycerides, fatty diacid esters, resin acid esters, resin acids, derivatives of such compounds, and mixtures of such compounds, either of animal or vegetable origin.

## Patentansprüche

1. Bituminöses Bindemittel zur Umsetzung von Schichten und/oder Belägen im Straßenbau und/oder Bauwesen, umfassend mindestens ein Bitumen und mindestens ein Flux für Bitumen auf Basis von natürlichen Fetten, umfassend bituminöse Fettketten, **dadurch gekennzeichnet, dass** diese natürlichen Fette mindestens einer Reaktion der chemischen Funktionalisierung unterzogen wurden, wobei mindestens eine funktionelle Sauerstoffgruppe eingeführt wurde.

2. Bindemittel nach Anspruch 1, **dadurch gekennzeichnet, dass** es zwischen 0,1 und 30 Gew.-% Flux hinsichtlich des Gesamtgewichtes des Bindemittels umfasst, vorzugsweise zwischen 0,5 und 10 Gew.-% hinsichtlich des Gesamtgewichtes des Bindemittels.

3. Bindemittel nach Anspruch 2, **dadurch gekennzeichnet, dass** es zwischen 2 und 15 Gew.-% Flux hinsichtlich des Gesamtgewichtes des Bindemittels umfasst, wenn es in den Oberflächenbehandlungstechniken mit wasserfreien Bindemitteln benutzt wird.

4. Bindemittel nach Anspruch 2, **dadurch gekennzeichnet, dass** es zwischen 0,5 und 5 Gew.-% Flux hinsichtlich des Gesamtgewichtes des Bindemittels umfasst, wenn es in den Oberflächenbehandlungstechniken mit Emulsion benutzt wird.

5. Bindemittel nach Anspruch 2, **dadurch gekennzeichnet, dass** es zwischen 0,5 und 30 Gew.-% Flux hinsichtlich des Gesamtgewichtes des Bindemittels umfasst, wenn es in den Kaltverfahrenstechniken mit Emulsion benutzt wird.

6. Bindemittel nach Anspruch 2, **dadurch gekennzeichnet, dass** es zwischen 0,5 und 15 Gew.-% Flux hinsichtlich des Gesamtgewichtes des Bindemittels umfasst, wenn es in den Beschichtungstechniken mit gefluxtem Bitumen benutzt wird.

7. Bindemittel nach einem der vorhergehenden Ansprüche, **dadurch gekennzeichnet, dass** die funktionelle Sauerstoffgruppe aus den Carbonsäuregruppen, Dicarbonsäuregruppen, Epoxidgruppen, Peroxidgruppen, Aldehydgruppen, Ethergruppen, Estergruppen, Alkoholgruppen und Ketongruppen ausgewählt ist.

8. Bindemittel nach einem der vorhergehenden Ansprüche, **dadurch gekennzeichnet, dass** die natürlichen Fette aus Ölen, die aus der Natur gewonnen werden, oder ihren Derivaten, Fetten, die aus der Natur gewonnen werden, oder ihren Derivaten, gebrauchten pflanzlichen Ölen, die aus der Nahrungsmittelindustrie stammen, und ihren Mischungen ausgewählt sind.

9. Bindemittel nach einem der vorhergehenden Ansprüche, **dadurch gekennzeichnet, dass** die natürlichen Fette aus tierischen und/oder pflanzlichen Ölen und Fetten, vorzugsweise pflanzlichen Ölen, ausgewählt sind.

10. Bindemittel nach Anspruch 9, **dadurch gekennzeichnet, dass** die pflanzlichen Öle aus Sonnenblumenöl, Rapsöl, Erdnussöl, Kokosnussöl, Leinöl, Palmöl, Sojaöl, Olivenöl, Rizinusöl, Maisöl, Kürbiskernöl, Traubenkernöl, Jojobaöl, Sesamöl, Nussöl, Haselnussöl, Chinaöl, Tallöl sowie deren Mischungen ausgewählt sind.

11. Bindemittel nach einem der vorhergehenden Ansprüche, **dadurch gekennzeichnet, dass** die natürlichen Fette Fettsäuren, Fettsäureester, vorzugsweise Alkylester, Fettalkohole, Fettalkoholester, Triglyceride, Fett-Disäureester, Harzsäureester, Harzsäuren, Derivate von diesen Verbindungen und Mischungen aus diesen Verbindungen tierischen oder pflanzlichen Ursprungs sind.

12. Bindemittel nach einem der vorhergehenden Ansprüche, **dadurch gekennzeichnet, dass** die natürlichen Fette mindestens ein Fettsäuremonoester umfassen, das durch Umesterung eines Triglycerids mittels eines C₁-C₄-Alkohols erhalten wurde.

13. Bindemittel nach Anspruch 12, **dadurch gekennzeichnet, dass** die Reaktion der chemischen Funktionalisierung mindestens eine Epoxid-und/oder Ethergruppe eingeführt hat.

14. Bindemittel nach einem der Ansprüche 1 bis 11, **dadurch gekennzeichnet, dass** die natürlichen Fette mindestens ein Tallölderivat umfassen, das mindestens einer Reaktion der chemischen Funktionalisierung unterzogen wurde, wobei mindestens eine funktionelle Epoxid- und/oder Ethergruppe eingeführt wurde.

15. Bindemittel nach einem der vorhergehenden Ansprüche, **dadurch gekennzeichnet, dass** der Flux auf Basis natürlicher Fette eine kinematische Viskosität zwischen 4 und 10 mm²/s bei 40 °C aufweist.

16. Material zur Umsetzung von Schichten und/oder Belägen im Straßenbau und/oder Bauwesen, **dadurch gekennzeichnet, dass** es ein bituminöses Bindemittel zur Umsetzung von Schichten und/oder Belägen im Straßenbau und/oder Bauwesen nach einem der Ansprüche 1 bis 15 umfasst.

17. Material nach Anspruch 16, **dadurch gekennzeichnet, dass** es ferner ein Granulat umfasst.

18. Benutzung eines natürlichen Fettes als Flux für ein bituminöses Bindemittel, umfassend bituminöse Fettketten, **dadurch gekennzeichnet, dass** das natürliche Fett mindestens einer Reaktion der chemischen Funktionalisierung unterzogen wurde, wobei mindestens eine funktionelle Sauerstoffgruppe eingeführt wurde, vorzugsweise ausgewählt aus Carbonsäuregruppen, Dicarbonsäuregruppen, Epoxidgruppen, Peroxidgruppen, Aldehydgruppen, Ethergruppen, Estergruppen, Alkoholgruppen und Ketongruppen.

19. Benutzung nach Anspruch 18 in den Oberflächenbehandlungstechniken mit wasserfreien Bindemitteln, in Oberflächenbehandlungstechniken mit Emulsion, in Kaltverfahrenstechniken mit Emulsion oder in Beschichtungstechniken mit gefluxtem Bitumen.

20. Benutzung nach einem der Ansprüche 18 oder 19, **dadurch gekennzeichnet, dass** das natürliche Fett derart ist, wie in einem der Ansprüche 8 bis 15 definiert.

21. Flux für Bitumen auf Basis von natürlichen Fetten, umfassend bituminöse Fettketten, **dadurch gekennzeichnet, dass** die natürlichen Fette mindestens einer Reaktion der chemischen Funktionalisierung unterzogen wurden, wobei mindestens eine funktionelle Sauerstoffgruppe eingeführt wurde, die aus Peroxidgruppen, Aldehydgruppen, Ethergruppen, Estergruppen, Alkoholgruppen und Ketongruppen ausgewählt wurde.

22. Flux für Bitumen auf Basis von natürlichen Fetten, umfassend bituminöse Fettketten, **dadurch gekennzeichnet, dass** er mindestens ein Tallölderivat umfasst, das mindestens einer Reaktion der chemischen Funktionalisierung unterzogen wurde, wobei mindestens eine funktionelle Gruppe eingeführt wurde, die aus den Carbonsäuregruppen, Epoxidgruppen, Peroxidgruppen, Aldehydgruppen, Ethergruppen, Estergruppen, Alkoholgruppen und Ketongruppen, vorzugsweise Epoxid- und/oder Ethergruppen, ausgewählt wurde.

23. Flux nach Anspruch 22, **dadurch gekennzeichnet, dass** das Tallölderivat mittels eines C₁-C₄-Alkohols vor oder nach der Reaktion der chemischen Funktionalisierung einer Veresterung unterzogen wurde.

24. Flux für Bitumen auf Basis von natürlichen Fetten, umfassend bituminöse Fettketten, **dadurch gekennzeichnet, dass** er mindestens ein Fettsäurealkylmonoester umfasst, das mindestens einer Reaktion der chemischen Funktionalisierung unterzogen wurde, wobei mindestens eine funktionelle Gruppe eingeführt wurde, die aus den Carbonsäuregruppen, Dicarbonsäuregruppen, Peroxidgruppen, Aldehydgruppen, Ethergruppen, Estergruppen, Alkoholgruppen und Ketongruppen, vorzugsweise Ethergruppen, ausgewählt wurde.

25. Flux nach einem der Ansprüche 21 bis 24, **dadurch gekennzeichnet, dass** er eine kinematische Viskosität zwischen 4 und 10 mm²/s bei 40 °C aufweist.

26. Flux nach einem der Ansprüche 21 bis 25, **dadurch gekennzeichnet, dass** die natürlichen Fette aus Ölen, die aus der Natur gewonnen werden, oder ihren Derivaten, Fetten, die aus der Natur gewonnen werden, oder ihren Derivaten, gebrauchten pflanzlichen Ölen, die aus der Nahrungsmittelindustrie stammen, und deren Mischungen ausgewählt sind.

27. Flux nach einem der Ansprüche 21 bis 26, **dadurch gekennzeichnet, dass** die natürlichen Fette aus tierischen und/oder pflanzlichen Ölen und Fetten, vorzugsweise pflanzlichen Ölen, ausgewählt sind.

28. Flux nach Anspruch 27, **dadurch gekennzeichnet, dass** die pflanzlichen Öle aus Sonnenblumenöl, Rapsöl, Erdnussöl, Kokosnussöl, Leinöl, Palmöl, Sojaöl, Olivenöl, Rizinusöl, Maisöl, Kürbiskernöl, Traubenkernöl, Jojobaöl, Sesamöl, Nussöl, Haselnussöl, Chinaöl, Tallöl sowie deren Mischungen ausgewählt sind.

29. Flux nach einem der Ansprüche 21 bis 28, **dadurch gekennzeichnet, dass** die natürlichen Fette Fettsäuren, Fettsäureester, vorzugsweise Alkylester, Fettalkohole, Fettalkoholester, Triglyceride, Fett-Disäureester, Harzsäureester, Harzsäuren, Derivate von diesen Verbindungen und Mischungen aus diesen Verbindungen tierischen oder pflanzlichen Ursprungs sind.
